# EUROPEAN PATENT APPLICATION

(11) **EP 2 902 267 A1**
(43) Date of publication of application: **05.08.2015**
(21) Application number: 13841260.6
(22) Date of filing: 18.09.2013
(51) Int. Cl.: B60R 16/02, B60Q 1/44, B60Q 11/00

(54) **BRAKE LIGHT DRIVE CONTROL DEVICE**

(30) Priority: 27.09.2012 JP 2012213594
(71) Applicant: Yazaki Corporation, Tokyo 108-0073 (JP)
(72) Inventor: KONDOU, Tatsumi, Makinohara-shi Shizuoka 421-0407 (JP)
(74) Representative: Hoffmann Eitle
(86) International application number: PCT/JP2013/075181
(87) International publication number: WO 2014/050667

(57) **Abstract**

In a brake light drive control device, in a case where an overcurrent is caused in a semiconductor device circuit (20) which outputs pulsed driving electric power to a brake light, even when a brake pedal is repeatedly operated, a controller (10) stops outputting a drive signal after repeatedly outputting the drive signal in accordance with the operation of the brake pedal at predetermined times. Accordingly, the number of repeated ON/OFF operation of a switching device as a semiconductor device of the semiconductor device circuit (20) decreases.

## Description

### TECHNICAL FIELD

The present invention relates to a brake light drive control device used for implementing drive control of brake lights including brake lamps and a stop lamp installed in a vehicle and particularly used for protecting a semiconductor device circuit for driving the brake lights.

### BACKGROUND ART

A vehicle is provided, on the rear side thereof, with brake lamps as brake lights arranged on both right and left sides. The vehicle is sometimes further provided with a stop lamp as brake light located substantially in the middle of the rear side, in addition to the brake lamps. These brake lights are lighted by a brake light drive control device when brake pedals are used.

The brake light drive control device includes a semiconductor device circuit which outputs driving electric power to the brake lights, and a controller which controls the operation of the semiconductor device circuit. Once a key is turned to a position at which an engine starts, an ignition switch of the vehicle is turned on. When a stop lamp switch is turned on in association with the operation of a brake pedal, a pulsed drive signal is output from the controller to the semiconductor device circuit.

Then, driving electric power subjected to pulse width modulation by a switching operation of the semiconductor device circuit is supplied to the brake lights so that the brake lights are lighted.

Such a brake light drive control device may include a protection circuit for preventing damage or deterioration derived from overcurrent.

There is known an electric power supply control device, as disclosed in PTL 1, wherein a protection circuit temporarily switches off a drive signal supplied to a switching device when anomaly is detected by an anomaly detection means, so as to stop the operation of the switching device.

### CITATION LIST

### PATENT LITERATURE

PTL 1: JP 2010-281298 A

### SUMMARY OF INVENTION

If a short circuit is caused between the semiconductor device circuit and the brake lights because of a particular reason (such as deterioration of wires), an overcurrent may flow through the semiconductor device circuit. Here, a short circuit includes a dead short circuit caused in relation to a ground (a vehicle body) and a local short circuit caused between wires due to deterioration of insulating films.

In such a case, the electric power supply control device described in PTL 1 can prevent the overcurrent from flowing through the switching device of the semiconductor device circuit by temporality switching off the drive signal supplied to the switching device.

However, the electric power supply control device described in PTL 1 relates to a technique for implementing electric power supply control for glow plugs and is therefore required to ensure overcurrent protection for the semiconductor device circuit in association with an operation of a brake pedal in order to protect the semiconductor device circuit which drives the brake lights including the brake lamps and the stop lamp installed in the vehicle.

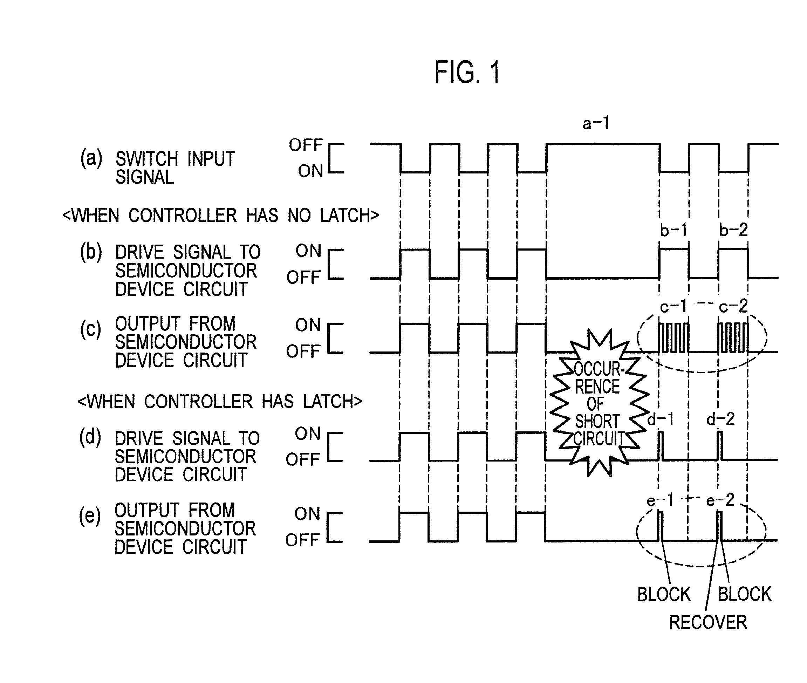

An example of such overcurrent protection for a semiconductor device circuit in association with an operation of a brake pedal is explained below with reference to Fig. 1.

As illustrated in Chart (a) (switch input signal) of Fig. 1, a switch input signal of a stop lamp switch is conceived to be turned on/off in association with the operation of the brake pedal. In addition, a short circuit is conceived to be caused between the semiconductor device circuit and a brake light when the brake pedal is repeatedly operated several times because of urgency during the period indicated by "a-1" in Chart (a) of Fig. 1.

When a short circuit is caused, an overcurrent detection signal is conceived to be output to a controller from a protection circuit of the semiconductor device circuit. When the controller has no latch, a drive signal output to the semiconductor device circuit, as indicated by "b-1" and "b-2" in Chart (b) (drive signal to semiconductor device circuit) of Fig. 1, is conceived to have the same pulse width as the switch input signal. Here, "latch" means that, when the controller receives the overcurrent detection signal, a state that the switching device of the semiconductor device circuit is turned off is kept every time the switch input signal is detected.

The operation of the switching device of the semiconductor device circuit is controlled by the protection circuit, and a signal (driving electric power) repeatedly changing ON/OFF states with a narrow pulse width is output from the semiconductor device circuit, as indicated by "c-1" and "c-2" in Chart (c) (output from the semiconductor device circuit) of Fig. 1, during the ON periods of the drive signal indicated by "b-1" and "b-2". Namely, the ON/OFF states of the semiconductor device circuit are repeatedly changed in such a manner as to repeat the action that the switching device which is turned on due to the drive signal of "b-1" is immediately blocked by the protection circuit.

Accordingly, stress applied from the semiconductor device circuit or the switching device of the semiconductor device circuit to loads on the downstream side is reduced.

When there is a latch, on the other hand, the drive signal to the semiconductor device circuit is synchronized with the switch input signal at the start of the ON state and appears as a pulse signal having a narrow ON width, as indicated by "d-1" and "d-2" in Chart (d) (drive signal to semiconductor device circuit) of Fig. 1.

Thus, the operation of the switching device of the semiconductor device circuit is controlled by the protection circuit so that the semiconductor device circuit outputs a signal corresponding to the drive signal. Namely, as indicated by "e-1" in Chart (e) (output from the semiconductor device circuit) of Fig. 1, the output of the switching device is recovered at the time of rising of the pulse indicated by "d-1" but is immediately blocked by the protection circuit. In such a case, the output to the brake lights from the semiconductor device circuit further decreases so that the brightness of the brake lights further decreases or the brake lights are not lighted.

As described above, during the short circuit, the ON period of the pulse showing the output from the semiconductor device circuit is conceived to be shorter when the controller includes the latch than that when there is no latch. Thus, the stress applied from the semiconductor device circuit or the switching device of the semiconductor device circuit to the loads on the downstream side can be further reduced.

However, even when the controller includes the latch, the switching device of the semiconductor device circuit repeatedly changes the ON/OFF states every time the drive signal from the controller to the semiconductor device circuit is output.

Furthermore, since the brake lights are located on the rear side of the vehicle, a state that the brake lights are not lighted is not generally realized until a third person points it out.

Thus, as the number of repeated change of the ON/OFF states of the semiconductor device circuit increases, the stress on the switching device of the semiconductor device circuit increases. This may lead to a risk of causing damage or deterioration of the semiconductor device circuit.

The present invention has been made in view of the problems described above. An object of the present invention is to provide a brake light drive control device capable of reducing stress on a semiconductor device of a semiconductor device circuit and reliably preventing damage or deterioration of the semiconductor device even when the semiconductor device circuit and a brake light are in a short-circuit state.

A brake light drive control device according to a first aspect of the present invention for implementing a drive control of a brake light installed in a vehicle includes: a semiconductor device circuit configured to output pulsed driving electric power to the brake light; and a controller, in order to implement the drive control of the semiconductor device circuit, configured to output a pulsed drive signal coinciding with an ON period of a switch which is turned on in association with an operation of a brake pedal of the vehicle when a driving power supply is turned on. In a case where an overcurrent is caused in the semiconductor device circuit, even when the brake pedal is repeatedly operated, the controller stops outputting the drive signal after repeatedly outputting the drive signal in accordance with the operation of the brake pedal at predetermined times.

The semiconductor device circuit may include a switching device configured to output the pulsed driving electric power by a switching operation, and a protection circuit configured to detect the overcurrent flowing through the switching device and output an overcurrent detection signal of the detected overcurrent to the controller. When the controller receives the overcurrent detection signal from the protection circuit, the controller recognizes that the overcurrent is caused in the semiconductor device circuit and outputs the drive signal in accordance with the operation of the brake pedal at the predetermined times as a signal each having a narrow ON width. Then, the protection circuit turns on/off the switching device based on the signal having the narrow ON width.

When the driving power supply is turned on again and when the controller receives the overcurrent detection signal from the protection circuit, the controller may output the drive signal fewer times than the predetermined times.

When the driving power supply is turned on again and when the controller does not receive the overcurrent detection signal from the protection circuit, the controller may output the drive signal as a pulsed signal coinciding with the ON period of the switch.

According to the brake light drive control device of the first aspect of the present invention, in the case where the overcurrent is caused in the semiconductor device circuit configured to output the pulsed driving electric power to the brake light, even when the brake pedal is repeatedly operated, the controller stops outputting the drive signal after repeatedly outputting the drive signal in accordance with the operation of the brake pedal at the predetermined times, so as to decrease the number of repeated ON/OFF operation of the semiconductor device circuit.

According to the brake light drive control device of the first aspect of the present invention, in the case where the overcurrent is caused in the semiconductor device circuit configured to output the pulsed driving electric power to the brake light, even when the brake pedal is repeatedly operated, the controller stops outputting the drive signal after repeatedly outputting the drive signal in accordance with the operation of the brake pedal at the predetermined times, so as to decrease the number of repeated ON/OFF operation of the semiconductor device circuit. Accordingly, stress on the semiconductor device of the semiconductor device circuit can be reduced, and damage or deterioration of the semiconductor device can reliably be prevented even when the semiconductor device circuit and the brake light are in a short-circuit state.

### BRIEF DESCRIPTION OF DRAWINGS

Fig. 1 is a waveform diagram for explaining a conventional example of overcurrent protection of a switching device or the like in association with an operation of a brake pedal.
Fig. 2 is view for explaining a brake light drive control device according to an embodiment.
Fig. 3 is a chart for explaining an operation of the brake light drive control device according to the embodiment.

### DESCRIPTION OF EMBODIMENTS

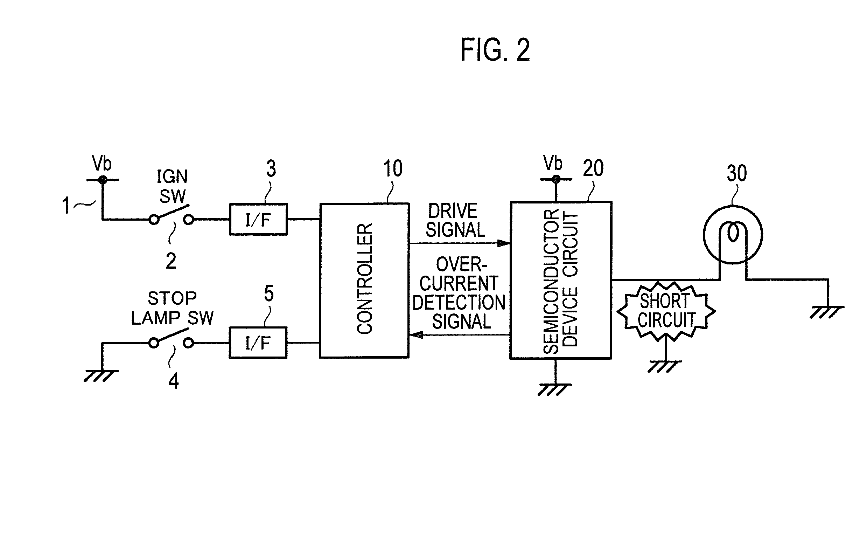

Hereinafter, a brake light drive control device according to an embodiment will be explained with reference to Fig. 2. Note that a fundamental control operation by the brake light drive control device according to the embodiment is applied to a case in which a controller includes a latch, as illustrated by Charts (d) and (e) of Fig. 1. Here, "latch" means that, when the controller receives an overcurrent detection signal, a state that a switching device of a semiconductor device circuit is turned off is kept every time a switch input signal is detected, as in the case described above.

As illustrated in Fig. 2, the brake light drive control device includes a controller 10 and a semiconductor device circuit 20.

The controller 10 is connected, on the input side, with an ignition switch (IGN SW) 2 connected to a battery 1, and with an interface (I/F) 3 which outputs, to the controller 10, a signal indicating that the ignition switch 2 is turned on.

Here, the ignition switch 2 is turned on when a key is rotated to a position at which an engine starts.

The controller 10 is also connected, on the input side, with a stop lamp switch (STOP LAMP SW) 4, and an interface (I/F) 5 which outputs, to the controller 10, a signal indicating that the stop lamp switch 4 is turned on. The stop lamp switch 4 is turned on/off in association with the operation of a brake pedal.

When the ignition switch 2 is turned on, the controller 10 outputs a drive signal subjected to pulse width modulation to the semiconductor device circuit 20 once the stop lamp switch 4 is turned on in association with the operation of the brake pedal.

When the controller 10 receives an overcurrent detection signal output at the time of occurrence of a short circuit from a protection circuit of the semiconductor device circuit 20, the controller 10 recognizes that the short circuit has been caused between the semiconductor device circuit 20 and a brake light 30 described below. The controller 10 then outputs a drive signal corresponding to the condition of the short circuit, which will be explained in detail below. Here, a short circuit includes a dead short circuit caused in relation to a ground (a vehicle body) and a local short circuit caused between wires due to deterioration of insulating films, as explained above. The short circuit described below includes both the dead short circuit and the local short circuit.

The semiconductor device circuit 20 switches on the brake light 30 including a stop lamp and brake lamps in accordance with the drive signal from the controller 10. The semiconductor device circuit 20 includes a switching device which outputs pulsed driving electric power by a switching operation in accordance with the drive signal from the controller 10, and the protection circuit which detects an overcurrent at the time of occurrence of a short circuit and controls the operation of the switching device. The protection circuit outputs the overcurrent detection signal to the controller 10 when the protection circuit detects the overcurrent. Reference numeral Vb is a power supply voltage of the battery 1 as a driving power supply.

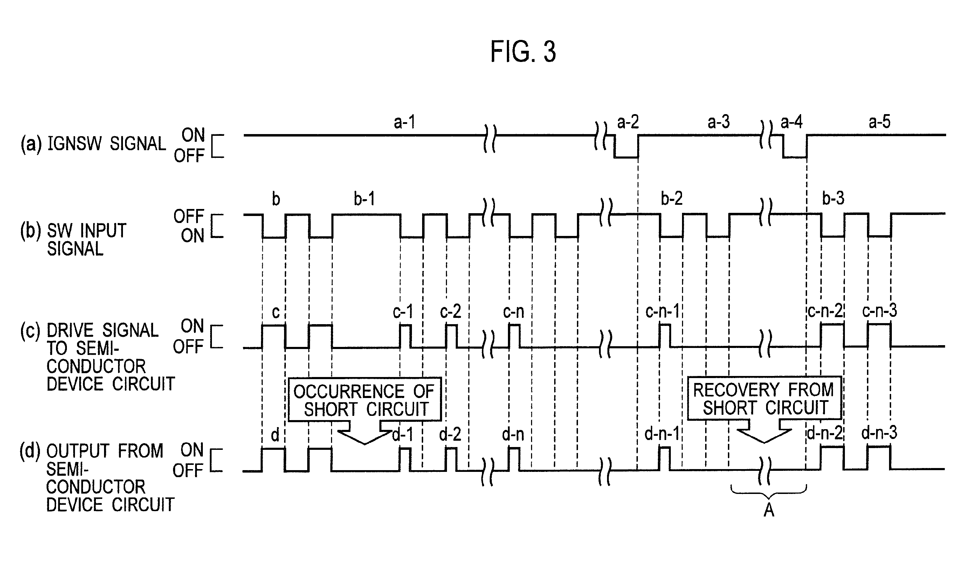

Hereinafter, an operation of the brake light drive control device according to the embodiment is explained below with reference to Fig. 3.

A regular operation of the brake light drive control device is as follows. First, the ignition switch 2 is in the ON state (ignition switch signal is ON), as indicated by "a-1" in Chart (a) (ignition switch signal) of Fig. 3. A switch input signal of the stop lamp switch 4 is then turned on in association with the operation of the brake pedal, as indicated by "b" in Chart (b) (switch input signal) of Fig. 3. In addition, a pulsed drive signal is output to the semiconductor device circuit 20, as indicated by "c" in Chart (c) (drive signal to semiconductor device circuit 20) of Fig. 3.

Here, the pulse width of the drive signal indicated by "c" in Chart (c) of Fig. 3 is conceived to be the same as the pulse width of the switch input signal indicated by "b" in Chart (b) of Fig. 3. Based on the drive signal from the controller 10, pulsed driving electric power caused by the switching operation of the switching device of the semiconductor device circuit 20 is output to the brake light 30, as indicated by "d" in Chart (d) (output from semiconductor device circuit 20) of Fig. 3. Accordingly, the brake light 30 is turned on in association with the operation of the brake pedal.

Here, a short circuit is conceived to be caused between the semiconductor device circuit 20 and the brake light 30 as illustrated in Fig. 2 when the operation of the brake pedal is repeated several times because of urgency during the period indicated by "b-1" in Chart (b) of Fig. 3.

At the time of occurrence of the short circuit, the protection circuit of the semiconductor device circuit 20 detects an overcurrent and outputs an overcurrent detection signal to the controller 10.

When the controller 10 receives the overcurrent detection signal from the semiconductor device circuit 20, the controller 10 recognizes that the short circuit has been caused between the semiconductor device circuit 20 and the brake light 30.

Since the controller 10 includes the latch described above, the controller 10 then outputs a drive signal, which is synchronized with the switch input signal at the start of the ON state and appears as a pulse signal having a narrow ON width as indicated by "c-1" to c-n" in Chart (c) in Fig. 3, to the semiconductor device circuit 20 every time the brake pedal is operated. At the same time, the controller 10 counts the number of output of the drive signal every time when the controller 10 outputs the drive signal indicated by "c-1" to c-n" in Chart (c) in Fig. 3 after the occurrence of the short circuit.

Based on the drive signal from the controller 10 after the occurrence of the short circuit, the pulsed driving electric power caused by the switching operation of the switching device of the semiconductor device circuit 20, is output to the brake light 30.

This driving electric power is a pulsed output signal having a narrow ON width, as indicated by "d-1" to d-n" in Chart (d) in Fig. 3. In other words, as indicated by "d-1" in Chart (d) in Fig. 3, the output of the switching device is recovered at the time of rising of the pulse indicated by "c-1" but is immediately blocked by the protection circuit. In such a case, the driving electric power output to the brake light 30 from the semiconductor device circuit 20 decreases so that the brightness of the brake light 30 decreases or the brake light 30 is not lighted.

When the number of output of the drive signal indicated by "c-1" to c-n" in Chart (c) in Fig. 3 after the occurrence of the short circuit reaches 10 times (n = 10), the controller 10 then stops outputting the drive signal even if the brake pedal is repeatedly operated. As a result, the switching operation of the switching device of the semiconductor device circuit 20 is stopped so that the output of the driving electric power to the brake light 30 is stopped.

Next, it is conceived that the ignition switch 2 is temporarily turned off (ignition switch signal is OFF) as indicated by "a-2" in Chart (a) of Fig. 3 and is then turned on (ignition switch signal is ON) as indicated by "a-3" in Chart (a) of Fig. 3.

As indicated by "b-2" in Chart (b) of Fig. 3, the switch input signal of the stop lamp switch 4 is turned on in association with the operation of the brake pedal. In addition, as indicated by "c-n-1" in Chart (c) of Fig. 3, the controller 10 outputs, to the semiconductor device circuit 20, a drive signal as a pulse signal having a narrow ON width which is as narrow as the width of the drive signal of "c-1". Further, as indicated by "d-n-1" in Chart (d) of Fig. 3, pulsed driving electric power having a narrow ON width, which is as narrow as the width of the drive signal of "d-1", is output to the brake light 30.

Here, Chart(c) of Fig. 3 exemplifies the case that the drive signal as a pulse signal having a narrow ON width is output only once. However, the embodiment is not limited to this as long as the number of output of the drive signal is smaller than the number of output of the drive signal indicated by "c-1" to "c-n" in Chart (c) of Fig. 3.

When the protection circuit of the semiconductor device circuit 20 detects the overcurrent, the protection circuit outputs the overcurrent detection signal to the controller 10.

When the controller 10 receives the overcurrent detection signal from the semiconductor device circuit 20, the controller 10 recognizes that the short circuit is still being caused and then stops outputting the drive signal even if the brake pedal is repeatedly operated afterward. Thus, the switching operation of the switching device of the semiconductor device circuit 20 is stopped so that the output of the driving electric power to the brake light 30 is stopped. As a result, the brake light 30 is not lighted.

When the short circuit is cleared during period A because of repair or the like, the overcurrent detection signal from the protection circuit is stopped. The controller 10 thus recognizes that the short circuit has been cleared. Next, it is conceived that the ignition switch 2 is temporarily turned off (ignition switch signal is OFF) as indicated by "a-4" in Chart (a) of Fig. 3 and is then turned on (ignition switch signal is ON) as indicated by "a-5" in Chart (a) of Fig. 3.

As indicated by "b-3" in Chart (b) of Fig. 3, when the switch input signal of the stop lamp switch 4 is turned on in association with the operation of the brake pedal, the controller 10 outputs a normal drive signal, as indicated by "c-n-2" in Chart (c) of Fig. 3, corresponding to the pulse width of the switch input signal of the stop lamp switch 4.

Based on the drive signal from the controller 10, pulsed driving electric power caused by the switching operation of the switching device of the semiconductor device circuit 20 is output to the brake light 30, as indicated by "d-n-2" in Chart (d) of Fig. 3.

Thereafter, when the switch input signal of the stop lamp switch 4 is turned on in association with the operation of the brake pedal, the controller 10 outputs a normal drive signal, as indicated by "c-n-3" in Chart (c) of Fig. 3, corresponding to the pulse width of the switch input signal of the stop lamp switch 4.

Thus, pulsed driving electric power caused by the switching operation of the switching device of the semiconductor device circuit 20 is output to the brake light 30, as indicated by "d-n-2" in Chart (d) of Fig. 3.

Accordingly, the brake light 30 can be lighted having a normal degree of brightness because the drive signal from the controller 10 is recognized to be a signal in accordance with the operation of the brake pedal after the short circuit is cleared.

As described above, in the brake light drive control device according to the embodiment, in the case where an overcurrent is caused in the semiconductor device circuit 20 that outputs pulsed driving electric power to the brake light 30, even when the brake pedal is repeatedly operated, the controller 10 stops outputting the drive signal after repeatedly outputting the drive signal in accordance with the operation of the brake pedal at predetermined times, so as to decrease the number of repeated ON/OFF operation of the switching device as a semiconductor device of the semiconductor device circuit 20.

In particular, in the brake light drive control device according to the embodiment, the semiconductor device circuit 20 includes the protection circuit that detects an overcurrent flowing through the switching device and outputs the detection signal of the detected overcurrent to the controller 10. When the controller 10 receives the overcurrent detection signal from the protection circuit, the controller 10 recognizes that the overcurrent has been caused in the semiconductor device circuit 20 so as to output the drive signal in accordance with the operation of the brake pedal at the predetermined times (10 times in the embodiment) as a signal having a narrow ON width. The protection circuit then turns on/off the switching device according to the signal having a narrow ON width. Thus, even when the semiconductor device circuit 20 and the brake light 30 are in a short-circuit state, stress on the switching device of the semiconductor device circuit 20 can be reduced, and damage or deterioration of the switching device can reliably be prevented.

In the brake light drive control device according to the embodiment, when the drive signal in accordance with the operation of the brake pedal is output at the predetermined times (10 times in the embodiment) as a signal having a narrow ON width, the protection circuit turns on/off the switching device according to the signal having a narrow ON width. Especially when the ON/OFF operation of the switch input signal of the stop lamp switch 4, which is turned on in association with the operation of the brake pedal, is repeated several times because of urgency during a short period of time, the repetition of the ON/OFF operation by the switching operation of the switching device of the semiconductor device circuit 20 can be stopped immediately. Accordingly, even when the semiconductor device circuit 20 and the brake light 30 are in a short-circuit state, the stress on the switching device of the semiconductor device circuit can be further reduced, and damage or deterioration of the switching device can be prevented more reliably.

Further, in the brake light drive control device according to the embodiment, when the ignition switch 2 is turned on again and when the controller 10 receives the overcurrent detection signal from the protection circuit, the controller 10 recognizes that the short circuit is still being caused so as to output the drive signal fewer times than the predetermined times (once in the embodiment). Accordingly, even when the ignition switch 2 is turned on again, the repetition of the ON/OFF operation by the switching device can be stopped immediately.

Further, in the brake light drive control device according to the embodiment, when the ignition switch 2 is turned on again and when the controller 10 does not receive the overcurrent detection signal from the protection circuit, the controller 10 outputs the drive signal as a pulsed signal coinciding with the ON period of the stop lamp switch 4 as a switch. Accordingly, once the short circuit is cleared due to repair or the like, the brake light 30 can be lighted having a normal degree of brightness.

The brake light drive control device according to the embodiment was exemplified by the case that, when the ignition switch 2 is turned on again and when the controller 10 receives the overcurrent detection signal, the controller 10 outputs the drive signal fewer times than the predetermined times (once in the embodiment). However, the embodiment is not limited to this, and the controller 10 can output the drive signal fewer times than the predetermined times (once in the embodiment) also when a battery is exchanged and when the controller 10 receives the overcurrent detection signal.

In addition, the brake light drive control device according to the embodiment was exemplified by the case that, when the ignition switch 2 is turned on again and when the controller 10 does not receive the overcurrent detection signal from the protection circuit, the controller 10 outputs the drive signal as a pulsed signal coinciding with the ON period of the stop lamp switch 4 as a switch. However, the embodiment is not limited to this, and the controller 10 can output the drive signal as a pulsed signal coinciding with the ON period of the stop lamp switch 4 as a switch also when a battery is exchanged and when the controller 10 does not receive the overcurrent detection signal.

In addition, the brake light drive control device according to the embodiment was exemplified by the case that the controller 10 includes a latch. However, the embodiment is not limited to this, and even when the controller has no latch, stress on the switching device of the semiconductor device circuit can be reduced due to the same control as described above so that damage or deterioration of the switching device can be prevented.

### INDUSTRIAL APPLICABILITY

The brake light drive control device according to the present invention can be applied not only to a drive control device for protecting a semiconductor device circuit for driving a stop lamp and brake lamps as brake lights but also to a drive control device for driving other lighting such as head lamps, direction indicators, position lamps, or backup lamps.

## Claims

1. A brake light drive control device for implementing a drive control of a brake light installed in a vehicle, comprising:
a semiconductor device circuit configured to output pulsed driving electric power to the brake light; and
a controller, in order to implement the drive control of the semiconductor device circuit, configured to output a pulsed drive signal coinciding with an ON period of a switch which is turned on in association with an operation of a brake pedal of the vehicle when a driving power supply is turned on, wherein,
in a case where an overcurrent is caused in the semiconductor device circuit, even when the brake pedal is repeatedly operated, the controller stops outputting the drive signal after repeatedly outputting the drive signal in accordance with the operation of the brake pedal at predetermined times.

2. The brake light drive control device according to claim 1, wherein
the semiconductor device circuit includes:
a switching device configured to output the pulsed driving electric power by a switching operation; and
a protection circuit configured to detect an overcurrent flowing through the switching device and output an overcurrent detection signal of the detected overcurrent to the controller,
when the controller receives the overcurrent detection signal from the protection circuit, the controller recognizes that the overcurrent is caused in the semiconductor device circuit and outputs the drive signal in accordance with the operation of the brake pedal at the predetermined times as a signal each having a narrow ON width; and
the protection circuit turns on/off the switching device based on the signal having the narrow ON width.

3. The brake light drive control device according to claim 2, wherein,
when the driving power supply is turned on again and when the controller receives the overcurrent detection signal from the protection circuit, the controller outputs the drive signal fewer times than the predetermined times.

4. The brake light drive control device according to claim 2, wherein,
when the driving power supply is turned on again and when the controller does not receive the overcurrent detection signal from the protection circuit, the controller outputs the drive signal as a pulsed signal coinciding with the ON period of the switch.
